# EUROPEAN PATENT SPECIFICATION

(11) **EP 1 095 572 B1**
(45) Date of publication and mention of the grant of the patent: **17.06.2009**
(21) Application number: 99935206.5
(22) Date of filing: 15.07.1999
(51) Int. Cl.: A23L 1/305, A23J 3/00, A23J 3/10, A23J 3/12, A23J 3/08, A23J 3/14, A23L 1/304, A61K 31/4172

(54) **USE OF AN IODINE-CONTAINING COMPOUND FOR PRODUCING AN IODINATED FOOD PRODUCT TO PREVENT CONDITIONS CAUSED BY MALFUNCTIONS OF THE THYROID GLAND**
VERWENDUNG EINER JODHALTIHEN VERBINDUNG ZUR HERSTELLUNG EINES IODIERTEN LEBENSMITTELPRODUKTES ZUR VERHINDERUNG VON ERKRANKUNGEN DER SCHILDDRÜSENFUNKTION
UTILISATION D'UNE COMPOSITION COMPRENANT DE L'IODE POUR LA PRODUCTION D'UN PRODUIT ALIMENTAIRE IODÉ POUR PRÉVENIR LES DYSFONCTIONNEMENTS DE LA GLANDE THYROÏDIENNE

(30) Priority: 16.07.1998 RU 98113764
(43) Date of publication of application: 02.05.2001
(73) Proprietor: Andreichuk, Vasily Petrovich, Borovsk, 249010 (RU)
(72) Inventor: Andreichuk, Vasily Petrovich, Borovsk, 249010 (RU)
(74) Representative: Andrews, Timothy Stephen
(86) International application number: PCT/RU1999/000235
(87) International publication number: WO 2000/003610

(56) References cited:
- EP-A- 0 394 904
- EP-A2- 0 148 600
- DD-B- 296 083
- FR-A1- 2 641 164
- FR-A1- 2 672 471
- GB-A- 1 303 374
- RU-C1- 2 097 990
- SU-A- 210 789
- US-A- 3 705 142
- US-A- 5 484 623
- DATABASE WPI Section Ch, Week 199428 Derwent Publications Ltd., London, GB; Class D13, AN 1994-230799 XP002303364 & JP 06 166889 A (OGURA N) 14 June 1994 (1994-06-14)
- DATABASE WPI Section Ch, Week 199326 Derwent Publications Ltd., London, GB; Class B05, AN 1993-212736 XP002303365 & SU 1 746 961 A1 (DAVYDOV A N) 15 July 1992 (1992-07-15)
- SUN W ET AL: "Kinetics and mechanism of the peroxidase-catalyzed iodination of tyrosine." BIOCHEMISTRY. 9 FEB 1993, vol. 32, no. 5, 9 February 1993 (1993-02-09), pages 1324-1331, XP002303363 ISSN: 0006-2960
- HOFFMANN W ET AL: "THE USE OF IODIZED BRINE FOR IODINE ENRICHMENT OF SEMI-HARD CHEESE" MILCHWISSENSCHAFT, VV GMBH VOLKSWIRTSCHAFTLICHER VERLAG. MUNCHEN, DE, vol. 52, no. 5, 1997, pages 257-259, XP000658165 ISSN: 0026-3788
- DELANGE F: "Risks and benefits of iodine supplementation" LANCET, XX, XX, vol. 351, no. 9107, 8 March 1998 (1998-03-08), pages 923-924, XP004266929 ISSN: 0140-6736

## Description

### FIELD OF THE ART

The present invention relates to the foodstuffs industry, and more particularly to use of an iodine-containing compound for producing biologically active food additives which contribute to the elimination of iodine deficiency in order to prevent conditions caused by malfunction of the thyroid gland.

Deficiency of iodine in soil and water, and, thence its limited dietary intake, leads to various pathologies of the thyroid gland, which, in its turn, causes a great number of concomitant diseases. To the physiological manifestations of the iodine deficiency in humans there belong: decline of strength, nervousness, hysteria, pathology of pregnancy, deaf-mutism, impairment of vision, slowdown of physical and mental development, even cretinism, in children.

At present it is planned to iodinate common salt with potassium iodate. This compound has a high thermostability, is less volatile, and in its physiological effect on the organism potassium iodate is similar to potassium iodide, into which it becomes transformed in the gastrointestinal tract.

The use of inorganic iodine compounds in the composition of common salt rules out the possibility of their uniform distribution in the volume of the salt. A satisfactory distribution of microscopic quantities of potassium iodide and iodate (40 parts of the iodine preparation per million parts of sodium chloride) is achievable only with the use of components having a very high degree of dispersity. Therefore, an attempt to iodinate plain-milling common salt does not allow standardizing iodine consumption, and this may cause overloading of the organism with iodine. Furthermore, it is established that isolated long-term in-taking of inorganic iodine preparations inhibits the biosynthesis of thyroid hormones, their release from thyroglobulin, low-ers the sensitivity of the thyroid gland to the thyrotropic hormone, induces the development of autoimmune disorders with the origination of thyroglobulin antibodies, blocks the secretion of the thyrotropic hormone by the hypophysis. Manufacturers of iodide point to side effects of this inorganic iodine compound, which are manifest in the hypersensitivity of patients (cutaneous reactions, eosinophilia), tachycardia, increased nervousness, insomnia, diarrhea. Apparently, a disturbance of the complicated biochemical mechanism of neurohormonal regulation of the function of the thyroid gland, of the metabolism of thyroid hormones in tissues, is associated with that the iodide entering the organism bypasses the liver and attacks the gland in an outburst manner.

Food products of plant and animal origin, containing organic iodine may be adopted as prototypes of the present invention. Plants are capable of extracting iodine from water and soil and of increasing its concentration in their tissues. However, for the daily requirements of a human in iodine to be satisfied, it is necessary to consume about 15 kg of vegetable food a day. Only the seaweeds laminaria contain large amounts of iodine in an organic form (0.5-1%), mainly in the form of iodinated L-tyrosine.

Cow milk and, in particular, casein, a protein formed in milk, should be regarded as the most relevant prototype. It is just casein that comprises iodinated tyrosine residues in its composition. The incorporation of iodine into the casein molecule occurs with the participation of the lactate peroxidase enzyme which is a component of milk. This mechanism of the iodination of milk proteins functions in human milk as well. However, the concentration of iodine in cow milk is subject to appreciable variations (0.001-0.257 mg/kg) and depends on the amount of iodine in the milk of cows. The iodine deficiency in humans cannot be fully remedied by the consumption of milk and dairy products because of limited and irregular use thereof, and also because of a low iodine content in the milk of cows from endemic regions.

Known in the art is a method of eliminating iodine deficiency, which comprises the steps of defatting milk, sterilizing it, introducing additives, precipitating proteins, drying and packaging (see Inventor's Certificate No. 560581, Cl. A 23 1 1/20, 1978).

Also known in the art is a method of eliminating iodine deficiency with food products, comprising the steps of selecting raw materials, preparing iodinated elements, introducing iodinated elements into the organism of a biological object with food products (see Inventor's Certificate No. 232747, Cl. A 23 1 1/20, 1967).

US-A-5,484,623 discloses a medicinal dietary system high in oil intake for the treatment of obesity and for the lowering of saturated fats. In one aspect of the invention, high doses of iodine (1-5 mg) are included in order to stimulate lipolysis for the treatment of obesity.

The known methods are disadvantageous because of a relatively poor quality of eliminating iodine deficiency with food products through the use of a mineral component, and also because of the high per unit costs involved.

It is an object of the present invention to improve the quality of eliminating iodine deficiency by using natural components, by reducing the cost of the iodine deficiency elimination process, and by imparting prophylactic properties to the product.

### DISCLOSURE OF THE INVENTION

Said object is accomplished by using iodinated dietary or tyrosine-containing proteins as the starting material. Iodinated elements are prepared enzymatically or chemically, and the iodinated elements re introduced into the organism of a biological object with food products in free state.

Thus, in accordance with the present invention there is provided the use of an iodinated food product as recited in claim 1.

Animal or vegetable proteins, mixtures of proteins or proteins of microbiological origin or amino acids or amino acids derived therefrom are used as iodinated products. Animal proteins in this case are caseins, milk serum proteins, haemoglobin proteins.

The resulting food product, in contrast to the inorganic form of iodine, is stable in prolonged storage (2-3 years, light-resistant, and non-volatile). With the daily norm of iodine consumption of 100 µg, 1.67 mg of the food additive (6% in terms of iodine) are required.

The food product containing iodinated casein is hydrolyzed in the gastrointestinal tract to separate amino acids, and the released iodinated L-tyrosine is effectively assimilated by the epithelium of the intestine. Though the liver cannot accumulate inorganic iodine, it can absorb organically bound iodine. The dehalogenase enzyme can eliminate iodine from tyrosine and thyronine compounds. A similar enzyme is contained in other tissues of the organism as well. The ability of the liver to metabolize organic iodine compounds by different pathways (deamination, conjugation) enables fine biochemical monitoring of the metabolism of iodine in the organism and of its reutilization. This is an essential distinction of the proposed food product from its inorganic analogs: iodide and iodate. The proposed food product is noted for its low cost. The consumption of this food product will be cheaper than the use of iodinated salt or preparations from laminaria.

It is also expedient that hydrolyzates should be used as the animal and vegetable proteins, and tyrosine or histidine, monoiodotyrosine, diiodotyrosine should be used as the amino acids.

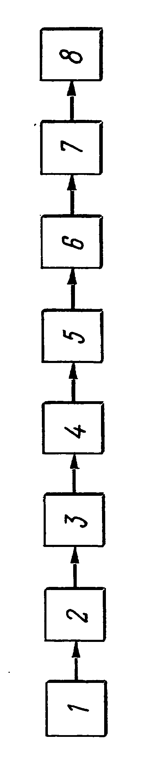

In preparing iodine-containing compounds enzymatically, vegetable peroxidase, thyroid peroxidase or chloroperoxidase is used. In preparing iodine-containing compounds chemically, chloramine T, iodine chloride, iodine trichloride or iodine is used. In carrying out the process, iodine-containing compounds which modify tyrosine and histidine residues of proteins are introduced first, and the precipitation and drying are carried out to produce iodinated protein. The food product is produced on a process line which is shown diagrammatically in Figure 1.

The line comprises the following interconnected units: unit 1 for selecting raw materials, unit 2 for modifying raw materials with unit 3 for preparing iodine-containing compounds, device 4 for introducing iodine-containing compounds, drying unit 5 and packaging unit 6, the unit 2 for modifying raw materials with the device for preparing iodine-containing compounds having member 7 for introducing enzymes (for instance, a milk enzyme-lactate peroxidase, thyroid peroxidase, plant peroxidase, chloroperoxidase), and device 8 for introducing chemicals (for instance, chloramine T, iodine chloride, iodine trichloride, iodine)the unit 1 for selecting raw materials being intended for introducing tyrosine- and/or histidine-containing raw materials (dietary proteins, milk serum proteins, caseins, hemoglobin proteins, vegetable, animal proteins and proteins of microbiological origin, their mixtures, hydrolyzates of vegetable, animal and microbiological proteins, iodinated proteins from vegetable and animal objects, hydrolyzates of iodinated proteins from vegetable raw materials, free amino acids tyrosine and histidine, monoiodotyrosine, diiodotyrosine, iodohistidine, thyronines).

The process for producing the food product by iodination with the help of the above-described line is performed in the following manner. The unit 1 for selecting raw materials is switched-on. Tyrosine-/histidine-containing raw materials are directed to the modification unit 2, wherein iodination of the selected raw materials is effected, using biotechnological or chemical modification techniques

Biotechnological modification contemplates iodination of tyrosine and/or histidine amino acid residues of proteins or hydrolyzates thereof or of free amino acids: tyrosine and/or histidine by means of enzymatic catalysis (with the use of milk lactate peroxidase, plant peroxidases, thyroid peroxidases, chloroperoxidase). They are introduced into the reaction mixture by means of the member 7 for introducing enzymes. Working solutions of potassium iodide or of hydrogen peroxide or buffer solutions are introduced into the reaction mixture in the modification unit with the help of the device for introducing iodine-containing compounds and the unit 3 for preparing iodine-containing compounds.
On completion of the modification process there are obtained dietary proteins or hydrolyzates thereof, iodinated with respect to tyrosine or hystidine amino acid residues, or free iodinated amino acids (monoiodotyrosine, diiodotyrosine, iodohistidine).

The chemical process of modification contemplates the use of the following reagents for performing the modification: iodine, chloramine T, iodine chloride, iodine , trichloride. The reagents are introduced by means of the device 8 for introducing chemicals on the unit 3 for preparing iodine-containing compounds. This process yields an iodinated product which comprises iodine with respect to the tyrosine amino acid residues in the composition of dietary protein.

On completion of the modification, the resulting iodinated food product is subjected to drying (unit 5) and packaging (unit 6). Selection of the raw materials for the modification by iodination is based on the principle of the required consumer's effect and economic expedience.

The food product containing iodinated casein is hydrolyzed in the gastrointestinal tract to separate amino acids, and the released iodinated L-tyrosine is effectively assimilated by the epithelium of the intestine. Though the liver cannot accumulate inorganic iodine, it can absorb organically bound iodine. The dehalogenase enzyme can eliminate iodine from tyrosine and thyronine compounds. A similar enzyme is contained in other tissues of the organism as well.

The properties of the iodine-containing food product make it suitable for use in milk, fermented dairy products, ice cream, macaroni, confectionery, chewing gum, drinks (kvass, beer), as well as in bread and bakery products. The use of the iodine-containing product does not tell on the organoleptic properties of bread, nor does it require from manufacturers of bakery products any essential capital inputs or modernization of the equipment.

## Claims

1. Use of an iodine-containing compound for the preparation of an iodinated food product for the elimination of iodine deficiency disorders, wherein said iodine-containing compounds are animal or vegetable proteins and/or proteins of microbiological origin or amino acids derived therefrom, the preparation of said iodine-containing compounds being carried out enzymatically or chemically and the iodine-containing compounds in said food product being in the free state.

2. Use according to claim 1 wherein said iodine deficiency disorder is a condition caused by a malfunction of the thyroid gland selected from the group consisting of decline of strength, nervousness, hysteria, pathology of pregnancy, deaf-mutism, impairment of vision, retardation of physical and mental development and cretinism.

3. Use according to claim 1, **characterized in that** caseins are used as the animal proteins.

4. Use according to claim 1, **characterized in that** milk serum proteins are used as the animal proteins.

5. Use according to claim 1, **characterized in that** haemoglobin proteins are used as the animal proteins.

6. Use according to claim 1, **characterized in that** hydrolyzates of animal and vegetable proteins are used as the animal and vegetable proteins.

7. Use according to claim 1, **characterized in that** hydrolyzates of iodinated proteins are used as the animal and vegetable proteins.

8. Use according to any one of claims 1 to 7, **characterized in that** tyrosine and/or histidine are used as the iodinated amino acids in the iodine-containing compounds.

9. Use according to any one of claims 1 to 7, **characterized in that** iodinated tyrosine is used as the iodinated amino acid in the iodine-containing compounds.

10. Use according to any one of claims 1 to 7, **characterized in that** monoiodotyrosine is used as the iodinated amino acid in the iodine-containing compounds.

11. Use according to any one of claims 1 to 7, **characterized in that** diiodotyrosine is used as the iodinated amino acid in the iodine-containing compounds.

12. Use according to any one of claims 1 to 11, **characterized in that** the preparation of iodine-containing compounds enzymatically is carried out with the use of a milk enzyme.

13. Use according to any one of claims 1 to 11, **characterized in that** the preparation of iodine-containing compounds enzymatically is carried out with the use of a plant peroxidise.

14. Use according to any one of claims 1 to 11, **characterized in that** the preparation of iodine-containing compounds enzymatically is carried out with the use of thyroid peroxidase.

15. Use according to any one of claims 1 to 11, **characterized in that** the preparation of iodine-containing compounds enzymatically is carried out with the use of chloroperoxidase.

16. Use according to any one of claims 1 to 11, **characterized in that** the preparation of iodine-containing compounds chemically is carried out with the use of chloramine T.

17. Use according to any one of claims 1 to 11, **characterized in that** the preparation of iodine-containing compounds chemically is carried out with the use of iodine chloride.

18. Use according to any one of claims to 11, **characterized in that** the preparation of iodine-containing compounds chemically is carried out with the use of iodine trichloride.

19. Use according to any one of claims 1to 11 **characterized in that** the preparation of iodine-containing compounds chemically is carried out with the use of iodine.

## Patentansprüche

1. Verwendung einer iodhaltigen Verbindung für die Herstellung eines iodierten Nahrungsmittelprodukts Ausschluss von Iodmangelerkrankungen , wobei die iodhaltigen Verbindungen tierische oder pflanzliche Proteine und/oder Proteine mikrobiologischen Ursprungs oder daraus abgeleitete Aminosäuren sind, wobei die Herstellung der iodhaltigen Verbindungen enzymatisch oder chemisch ausgeführt wird und die iodhaltigen Verbindungen in dem Nahrungsmittelprodukt sich im freien Zustand befinden.

2. Verwendung nach Anspruch 1, wobei die Iodmangelerkrankung ein durch eine Funktionsstörung der Schilddrüse verursachtes Leiden ist, das aus der Gruppe ausgewählt ist, die aus Kräfteverfall, Nervosität, Hysterie, pathologischer Schwangerschaft, Taubstummheit, Sehstörung, körperlicher und geistiger Entwicklungsverzögerung und Kretinismus besteht.

3. Verwendung nach Anspruch 1, **dadurch gekennzeichnet, daß** Kaseine als die tierischen Proteine verwendet werden.

4. Verwendung nach Anspruch 1, **dadurch gekennzeichnet, daß** Molkenproteine als die tierischen Proteine verwendet werden.

5. Verwendung nach Anspruch 1, **dadurch gekennzeichnet, daß** Hämoglobinproteine als die tierischen Proteine verwendet werden.

6. Verwendung nach Anspruch 1, **dadurch gekennzeichnet, daß** Hydrolysate von tierischen und pflanzlichen Proteinen als die tierischen und pflanzlichen Proteine verwendet werden.

7. Verwendung nach Anspruch 1, **dadurch gekennzeichnet, daß** Hydrolysate von iodierten Proteinen als die tierischen und pflanzlichen Proteine verwendet werden.

8. Verwendung nach einem der Ansprüche 1 bis 7, **dadurch gekennzeichnet, daß** Tyrosin und/oder Histidin als die iodierten Aminosäuren in den iodhaltigen Verbindungen verwendet werden.

9. Verwendung nach einem der Ansprüche 1 bis 7, **dadurch gekennzeichnet, daß** iodiertes Tyrosin als die iodierte Aminosäure in den iodhaltigen Verbindungen verwendet wird.

10. Verwendung nach einem der Ansprüche 1 bis 7, **dadurch gekennzeichnet, daß** Monoiodtyrosin als die iodierte Aminosäure in den iodhaltigen Verbindungen verwendet wird.

11. Verwendung nach einem der Ansprüche 1 bis 7, **dadurch gekennzeichnet, daß** Diiodtyrosin als die iodierte Aminosäure in den iodhaltigen Verbindungen verwendet wird.

12. Verwendung nach einem der Ansprüche 1 bis 11, **dadurch gekennzeichnet, daß** die Herstellung von iodhaltigen Verbindungen enzymatisch unter Verwendung eines Milchenzyms ausgeführt wird.

13. Verwendung nach einem der Ansprüche 1 bis 11, **dadurch gekennzeichnet, daß** die Herstellung von iodhaltigen Verbindungen enzymatisch unter Verwendung einer Pflanzenperoxidase ausgeführt wird.

14. Verwendung nach einem der Ansprüche 1 bis 11, **dadurch gekennzeichnet, daß** die Herstellung von iodhaltigen Verbindungen enzymatisch unter Verwendung einer Schilddrüsenperoxidase ausgeführt wird.

15. Verwendung nach einem der Ansprüche 1 bis 11, **dadurch gekennzeichnet, daß** die Herstellung von iodhaltigen Verbindungen enzymatisch unter Verwendung einer Chlorperoxidase ausgeführt wird.

16. Verwendung nach einem der Ansprüche 1 bis 11, **dadurch gekennzeichnet, daß** die Herstellung von iodhaltigen Verbindungen chemisch unter Verwendung von Chloramin T ausgeführt wird.

17. Verwendung nach einem der Ansprüche 1 bis 11, **dadurch gekennzeichnet, daß** die Herstellung von iodhaltigen Verbindungen chemisch unter Verwendung von Iodchlorid ausgeführt wird.

18. Verwendung nach einem der Ansprüche 1 bis 11, **dadurch gekennzeichnet, daß** die Herstellung von iodhaltigen Verbindungen chemisch unter Verwendung von Iodtrichlorid ausgeführt wird.

19. Verwendung nach einem der Ansprüche 1 bis 11, **dadurch gekennzeichnet, daß** die Herstellung von iodhaltigen Verbindungen chemisch unter Verwendung von Iod ausgeführt wird.

## Revendications

1. Utilisation d'un composé contenant de l'iode pour la élimination d'un produit alimentaire iodé pour la prévention de troubles liés à une déficience en iode, dans laquelle les composés contenant de l'iode sont des protéines animales ou végétales et/ou des protéines d'origine microbiologique ou des acides aminés dérivés de celles-ci, la préparation desdits composés contenant de l'iode étant effectuée de manière enzymatique ou chimique et les composés contenant de l'iode dans ledit produit alimentaire étant à l'état libre.

2. Utilisation selon la revendication 1, dans laquelle ledit trouble lié à une déficience en iode est une maladie due à un dysfonctionnement de la glande thyroïde sélectionnée à partir du groupe constitué d'une baisse de force, d'un état de nervosité, d'hystérie, d'une pathologie de grossesse, de surdité et de mutisme, de déficience de la vision, d'un retard du développement physique et mental et de crétinisme.

3. Utilisation selon la revendication 1, **caractérisée en ce que** des caséines sont utilisées en tant que protéines animales.

4. Utilisation selon la revendication 1, **caractérisée en ce que** des protéines de lactosérum sont utilisées en tant que protéines animales.

5. Utilisation selon la revendication 1, **caractérisée en ce que** des protéines d'hémoglobine sont utilisées en tant que protéines animales.

6. Utilisation selon la revendication 1, **caractérisée en ce que** des hydrolyzats de protéines animales et végétales sont utilisés en tant que protéines animales ou végétales.

7. Utilisation selon la revendication 1, **caractérisée en ce que** des hydrolyzats de protéines iodés sont utilisés en tant que protéines animales ou végétales.

8. Utilisation selon l'une quelconque des revendications 1 à 7, **caractérisée en ce que** de la tyrosine et/ou de l'histidine sont utilisées en tant qu'acides aminés iodés dans les composés contenant de l'iode.

9. Utilisation selon l'une quelconque des revendications 1 à 7, **caractérisée en ce que** de la tyrosine iodée est utilisée en tant qu'acide aminé iodé dans les composés contenant de l'iode.

10. Utilisation selon l'une quelconque des revendications 1 à 7, **caractérisée en ce que** de la monoiodotyrosine est utilisée en tant qu'acide aminé iodé dans les composés contenant de l'iode.

11. Utilisation selon l'une quelconque des revendications 1 à 7, **caractérisée en ce que** de la diiodotyrosine est utilisée en tant qu'acide aminé iodé dans les composés contenant de l'iode.

12. Utilisation selon l'une quelconque des revendications 1 à 11, **caractérisée en ce que** la préparation enzymatique de composés contenant de l'iode est effectuée à l'aide d'une enzyme de lait.

13. Utilisation selon l'une quelconque des revendications 1 à 11, **caractérisée en ce que** la préparation enzymatique de composés contenant de l'iode est effectuée à l'aide de péroxidase végétale.

14. Utilisation selon l'une quelconque des revendications 1 à 11, **caractérisée en ce que** la préparation enzymatique de composés contenant de l'iode est effectuée à l'aide de thyropéroxidase.

15. Utilisation selon l'une quelconque des revendications 1 à 11, **caractérisée en ce que** la préparation enzymatique de composés contenant de l'iode est effectuée à l'aide de chloropéroxidase.

16. Utilisation selon l'une quelconque des revendications 1 à 11, **caractérisée en ce que** la préparation chimique de composés contenant de l'iode est effectuée à l'aide de chloramine T.

17. Utilisation selon l'une quelconque des revendications 1 à 11, **caractérisée en ce que** la préparation chimique de composés contenant de l'iode est effectuée à l'aide de chlorure d'iode.

18. Utilisation selon l'une quelconque des revendications 1 à 11, **caractérisée en ce que** la préparation chimique de composés contenant de l'iode est effectuée à l'aide de trichlorure d'iode.

19. Utilisation selon l'une quelconque des revendications 1 à 11, **caractérisée en ce que** la préparation chimique de composés contenant de l'iode est effectuée à l'aide d'iode.
